(19)

Europäisches
Patentamt
European
Patent Office
Office européen
des brevets

(11) **EP 2 130 062 B1**

(12) **EUROPÄISCHE PATENTSCHRIFT**

(45) Veröffentlichungstag und Bekanntmachung des Hinweises auf die Patenterteilung:
**31.08.2011 Patentblatt 2011/35**

(51) Int Cl.:
***G01S 13/90*** (2006.01)    ***G01S 7/28*** (2006.01)
***H01Q 3/26*** (2006.01)

(21) Anmeldenummer: **08734610.2**

(22) Anmeldetag: **14.03.2008**

(86) Internationale Anmeldenummer:
**PCT/EP2008/002052**

(87) Internationale Veröffentlichungsnummer:
**WO 2008/119455 (09.10.2008 Gazette 2008/41)**

(54) **VERFAHREN ZUM UNTERSUCHEN EINES EISGEBIETS ODER TROCKENEN GEBIETS MITTELS RADAR-ECHOLOT-SONDIERUNG**

METHOD FOR EXAMINING AN ICE REGION OR DRY REGION USING RADAR ECHO SOUNDING

PROCÉDÉ D'EXPLORATION D'UNE ZONE GLACIAIRE OU D'UNE ZONE SÈCHE PAR ÉCHOSONDAGE PAR RADAR

(84) Benannte Vertragsstaaten:
**AT BE BG CH CY CZ DK EE ES FI FR GB GR HR HU IE IS IT LI LT LU LV MC MT NL NO PL PT RO SE SI SK TR**

(30) Priorität: **29.03.2007 DE 102007015561**

(43) Veröffentlichungstag der Anmeldung:
**09.12.2009 Patentblatt 2009/50**

(73) Patentinhaber: **Deutsches Zentrum für Luft- und Raumfahrt e.V.**
**51147 Köln (DE)**

(72) Erfinder: **SCHEIBER, Rolf**
**82178 Puchheim (DE)**

(74) Vertreter: **von Kreisler Selting Werner**
**Deichmannhaus am Dom**
**Bahnhofsvorplatz 1**
**50667 Köln (DE)**

(56) Entgegenhaltungen:
**US-A- 3 995 271    US-B1- 6 188 348**

- **BRAATEN D ET AL: "Radar measurements of ice sheet thickness of outlet glaciers in Greenland" IGARSS 2002. IEEE 2002 INTERNATIONAL GEOSCIENCE AND REMOTE SENSING SYMPOSIUM. TORONTO, SWEDEN, JUNE 24-28, 2002; [IEEE INTERNATIONAL GEOSCIENCE AND REMOTE SENSING SYMPOSIUM], NEW YORK, NY : IEEE, US, Bd. 4, 24. Juni 2002 (2002-06-24), Seiten 2188-2189, XP010598552 ISBN: 978-0-7803-7536-9**
- **BARBAROSSA S ET AL: "A conceptual SAR/altimeter radar with subsurface capabilities, for space missions" 19900507; 19900507 - 19900510, 7. Mai 1990 (1990-05-07), Seiten 76-80, XP010007447**
- **PICARDI G ET AL: "Coherent cancellation of surface clutter for radar sounding" GEOSCIENCE AND REMOTE SENSING SYMPOSIUM, 1999. IGARSS '99 PROCEEDINGS. IEEE 1999 INTERNATIONAL HAMBURG, GERMANY 28 JUNE-2 JULY 1999, PISCATAWAY, NJ, USA, IEEE, US, Bd. 5, 28. Juni 1999 (1999-06-28), Seiten 2678-2680, XP010337080 ISBN: 978-0-7803-5207-0 in der Anmeldung erwähnt**
- **SCHEIBER ROLF ET AL: "Surface clutter suppression for ice sounding radars by coherent combination of repeat-pass data" IEEE INTERNATIONAL GEOSCIENCE AND REMOTE SENSING SYMPOSIUM, IGARSS 2007, 23. Juni 2007 (2007-06-23), - 28. Juni 2007 (2007-06-28) Seiten 3559-3562, XP002484884**

**Beschreibung**

Technisches Gebiet

Die Erfindung betrifft ein Verfahren zum Untersuchen eines Eisgebiets oder trockenen Gebiets mittels Radar-Echolot-Sondierung, wobei von einem das zu untersuchende Gebiet überfliegende Radarsensor die Oberfläche und das Volumeninnere des Gebiets beleuchtende Radarsendeimpulse in Nadirrichtung ausgesendet werden, die im Radarsensor empfangenden reflektierten Radarimpulssignale prozessiert und zu einem Radargramm ausgewertet werden und Maßnahmen zur Unterdrückung von Mehrdeutigkeiten vorgesehen sind.

Nachfolgend wird die grundsätzliche Funktionsweise eines Radarverfahrens für Echolot in Eis vorgestellt. Derartige Radarverfahren werden seit mehr als zwei Jahrzehnten in der Antarktis, in Grönland und auf anderen, kleineren Inseln, z.B. Spitzbergen-Svalbard, genutzt, um Informationen über Eisschichten, Eisdicken sowie den Felsuntergrund der Eisplatten abzuleiten. Die abgeleitete Information besteht aus einem Tiefenprofil der Eismasse und wird generell als Radargramm bezeichnet. Es beinhaltet die Radarreflektivität benachbarter Medien mit unterschiedlichen dielektrischen Eigenschaften. Die stärksten Reflexionen treten für gewöhnlich am Luft-Eis-Übergang bzw. an der unteren Grenze der Eismasse zum Felsuntergrund auf.

Stand der Technik

An dieser Stelle soll angemerkt werden, dass es unlängst mit dem Radar-Echolot MARSIS auf der Raumfähre Mars-Express gelungen ist, gefrorenes Wasser auf dem Mars nachzuweisen. In diesem Zusammenhang wird auf den Artikel von Picardi, G. et al., "Radar Soundings of the Subsurface of Mars", Science, Vol. 310, 23. Dezember 2005, Seiten 1925-1928, hingewiesen. Es zeigt sich also, dass derartige Eisuntersuchungen nicht nur für die Erde von Interesse sind.

Eis-Echolot-Radaruntersuchungen werden normalerweise bei niedrigen Frequenzen betrieben (einige 10 bis 500 MHz), die zu einer großen Eindringtiefe der Wellen in das Eisvolumen führen. Reflexionen treten auch bei internen Grenzschichten mit unterschiedlichen dielektrischen Eigenschaften auf, z.B. bei dünnen Ablagerungen vulkanischer Asche.

Um die Empfindlichkeit zu erhöhen, wurden in den letzten fünf bis zehn Jahren die alten flugzeuggestützten Radargeräte zunehmend durch neue kohärente Radarsysteme ersetzt. Diese erlauben eine sogenannte Doppler-Verarbeitung (Filterung oder "Doppler Beam Sharpening"), um das Antennendiagramm in Flugrichtung (Along Track) künstlich zu verkleinern. Damit können Mehrdeutigkeitsechos, die von Reflexionen vor und hinter dem Radarsensor stammen, herausgefiltert bzw. gedämpft werden und das Signal-Rausch-Verhältnis kann wegen der kohärenten Addition der interessierenden Signalanteile verbessert werden. In US 6 188 348 B1 sind derartige Verfahren beschrieben.

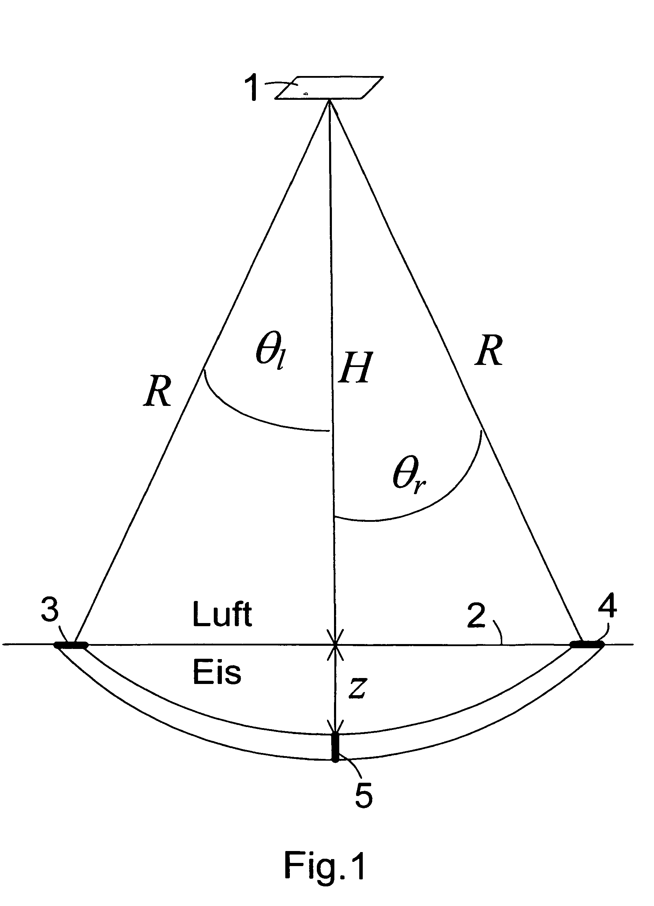

Allerdings werden durch diese bekannten Verfahren die von links und rechts des Flugpfades (Across Track) stammenden, sogenannten "Quer-Mehrdeutigkeiten" nicht wesentlich gedämpft. Zur Verdeutlichung dieses Zusammenhangs dient Fig.1, welche schematisch die Geometrie quer zur Flugrichtung eines nadirgerichteten Radarstrahls für Radar-Echolot in Eis zeigt. Die Flugrichtung des flugzeug- oder weltraumgestützten Radarsensors zeigt senkrecht in die Abbildungsebene.

Die Hochfrequenz-Radarimpulse werden über eine Antenne 1 des Radarsensors ausgesendet und die Echosignale werden dort auch empfangen. Mit $H$ ist die senkrechte Höhe der Antenne 1 über einer Referenzebene 2 bezeichnet, wobei sich im Fall von Untersuchungen auf der Erde zwischen der Antenne 1 und der Referenzebene 2 Luft befindet. Unterhalb der Referenzebene 2 befindet sich das hinsichtlich seiner Eigenschaften zu untersuchende Eis mit einer maximalen Eistiefe $z$.

Mehrdeutige Bodenspur-Oberflächenechosignale 3 und 4 von links unter dem Ablagewinkel $\Theta_1$ zur Nadirrichtung bzw. von rechts unter dem Ablagewinkel $\Theta_r$ zur Nadirrichtung und das Nutzsignal 5 aus der Nadirrichtung werden an der Antenne 1 des Radarsensors mit der gleichen, durch den Radius $R$ bestimmten Laufzeit empfangen. Diese Oberflächenechosignale 3 bzw. 4 sind für gewöhnlich viel stärker als die Signalanteile, die von den internen Eisschichten reflektiert werden und meistens auch stärker als die Echosignale vom Felsuntergrund.

Flugzeuggestützte Radarsensoren halten diese Mehrdeutigkeiten durch die Wahl einer sehr niedrigen Flughöhe $H$ von wenigen hundert Metern ziemlich gering. Dadurch wird die Tiefe, bis zu welcher Mehrdeutigkeitssignale das aus der Nadirrichtung stammende Nutzsignal überlagern, auf die obersten Eisschichten begrenzt. Für einen Einsatz vom Weltraum aus müssen jedoch andere Verfahren gefunden werden.

Zur Unterdrückung der vorher angesprochenen "Quer-Mehrdeutigkeiten" bei Radar-Echolotverfahren zur Eisuntersuchung sind bislang zwei unterschiedliche Methoden bekannt geworden.

Bei der ersten dieser beiden Methoden werden Antennen mit Mehrfachapertur verwendet. In diesem Falle werden mindestens zwei unabhängige Empfangsaperturen benötigt, um zwei unterschiedliche Antennendiagramme zu formen. Die geeignete Kombination, d.h. Addition und Subtraktion, der in den zwei Empfangskanälen empfangenen Radarsignale erlaubt es, eine Nullstelle in Richtung des interessierenden Nadirsignals entsprechend dem von Zielverfolgungsradaren bekannten Monopulsprinzip zu setzen, siehe beispielsweise D. R. Wehner: "High Resolution Radar", Artech House, 1995. Damit kann der Anteil der Mehrdeutigkeitssignale isoliert, geeignet gewichtet und vom Empfangssignal abgezogen werden.

Dieses Verfahrensprinzip wird auch für MARSIS, dem Radarsystem auf der Raumfähre Mars Express, eingesetzt, wobei die zwei Empfangsantennenaperturen von einem regulären Dipol und einem zusätzlichen Monopol gebildet werden, dessen Nullstelle in Nadirrichtung zeigt. Abgehandelt ist dieses Verfahren in dem Beitrag von G. Picardi, S. Sorge, R. Seu, G. Fedele, R. L. Jordan, "Coherent Cancellation of Surface Clutter for Radar Sounding", IGARSS Proceedings, IEEE Geoscience and Remote Sensing Symposium, Hamburg, Deutschland, IEEE 99CH36293C, 28. Juni - 2. Juli 1999.

Antennensysteme mit mehrfacher Empfangsantennenapertur weisen eine Reihe von Nachteilen auf. So wird im Falle von Zweiapertur-Empfangsantennen, z.B. bei MARSIS, eine Symmetrie bezüglich der linken und rechten Mehrdeutigkeiten angenommen, was jedoch oft nicht zutreffend ist. Darüber hinaus ist ein erhöhter Hardware-Aufwand beim Design und Bau der Antenne nötig, speziell wenn mehr als zwei Aperturen erforderlich sind. Zudem besteht eine erhöhte Datenrate für den Downlink der Empfangskanäle zur Erde. Schließlich müssen die Antennendiagramme genauestens bekannt sein.

Bei der zweiten dieser beiden Methoden handelt es sich um ein interferometrisches Off-Nadir-Echolotverfahren. Dabei handelt es sich um ein völlig andersartiges Verfahren, das auf dem Prinzip der Interferometrie für abbildendes Radar mit synthetischer Apertur (SAR-Interferometrie) beruht, d.h. einem in der Raumfahrt bewährten Sensorsystem zur Erzeugung digitaler Geländemodelle. Anders als beim traditionell nadir-blickenden Radar-Echolot-Verfahren, das lediglich ein Profil der Eisschichten ermitteln kann, verspricht das interferometrische Off-Nadir-Echolotverfahren in einer weltraumgestützten Implementierung die Abbildung eines Streifens von einigen 10 km Breite.

Auf der Grundlage interferometrischer Empfangsdaten zweier räumlich getrennter Antennen wird ein sogenanntes Interferogramm in Form eines konjugiert komplexen Produktes berechnet. Die von der Eisoberfläche und vom Felsuntergrund ausgelösten Reflexionen belegen im Spektrum dieses Interferogramms unterschiedliche Frequenzen und können bei entsprechender Auslegung des Systems gefiltert werden, woraus sich Rückschlüsse auf die Eisdicke ergeben. Dieses Verfahren wird derzeit im Rahmen des "NASA Incubator"-Programms untersucht und ist in einem Beitrag von E. Rodriguez, A. Freeman, K. Jezek, X. Wu: "A New Technique for Interferometric Sounding of Ice Sheets", Proc. EUSAR, VDE, ISBN 978-3-8007-2960-9, 16. - 18. Mai 2006, abgehandelt.

Auch das interferometrische Off-Nadir-Radar-Echolotverfahren weist eine Reihe von Nachteilen auf. So kann die erhöhte Dämpfung der elektromagnetischen Welle in der Eisschicht wegen der Off-Nadir-Geometrie die Detektion des Felsuntergrundes unter Umständen erheblich erschweren. Überdies können Reflexionen von internen Eisschichten unter Umständen in der Off-Nadir-Geometrie ebenfalls schlecht detektierbar sein.

Da bei dünnen Eisdicken die interferometrischen Spektralkomponenten für Eisoberfläche und Felsuntergrund enger zusammenrücken, ist die Diskriminierung der zwei Signalkomponenten in diesem Falle begrenzt. Darüber hinaus ergibt sich ein erhöhter Hardware-Aufwand für die Implementierung zweier räumlich versetzter Antennen und zweier getrennter Empfangskanäle. Schließlich erweist sich die Mehrdeutigkeitsunterdrückung für Signalkomponenten der jeweils entgegengesetzten Off-Nadir-Seite als schwierig, da sich die Signale in der Regel nicht kohärente überlagern.

Der Artikel D. Braaten, S. Gogineni: "Radar Measurements of Ice Sheet Thickness of Outlet Glaciers in Greenland", IGARSS 2002, IEEE 2002 International Geoscience and Remote Sensing Symposium, Toronto, ON, Kanada, Juni 2002 (24.06.2002), 2002 IEEE International, US, Vol. 4, Seiten 2188-2189, XP010598552 ISBN: 978-0-7803-7536-9 offenbart ein Verfahren zum Untersuchen eines Eisgebiets mittels Radar-Echolot-Sondierung, wobei von einem das zu untersuchende Gebiet überfliegenden Radarsensor die Oberfläche und das Volumeninnere des Gebiets beleuchtende Radarsendeimpulse in Nadirrichtung ausgesendet werden. Die im Radarsensor empfangenen reflektierten Radarimpulssignale werden prozessiert und zu einem Radargramm ausgewertet. Zur Unterdrückung von Mehrdeutigkeiten infolge von Eisoberflächenrauigkeits-Clutter sind Maßnahmen unter Verwendung eines hochpräzisen Laser-Höhenmessers vorgesehen, mit dessen Hilfe somit die Topographie und Rauigkeit der Umgebung des zu untersuchenden Gebiets ermittelt und bei der Radar-Echolot-Sondierung berücksichtigt wird.

Darstellung der Erfindung

Aufgabe der vorliegenden Erfindung ist es, ein für flugzeugals auch für weltraumgestützte Radarsensoren gleichermaßen geeignetes Echolot-Verfahren zum Untersuchen eines Eisgebiets oder trockenen Gebiets zu schaffen, mit dem Echosignal-Mehrdeutigkeiten quer zur Überflugrichtung in einem erheblich größerem Maße ausgeschlossen werden als bei Verwendung von Antennensystemen mit Mehrfachempfangsapertur und auch keine strengen Anforderungen an die Kenntnis des Antennendiagramms bzw. der Planarität des Radarstrahl-Auftreffgebiets gestellt werden.

Gemäß der Erfindung wird ein Verfahren zum Untersuchen eines Eisgebiets oder trockenen Gebiets mittels Radar-Echolot-Sondierung mit den Merkmalen des Anspruchs 1 vorgeschlagen.

Unter den in Anspruch 1 angeführten kompatiblen Radarsensoren werden Sensoren verstanden, die bei gleicher Frequenz und damit bei gleicher Betriebswellenlänge betrieben werden. Hierbei müssen die Sensoren nicht notwendigerweise baugleich sein; jedoch müssen sie in der Lage sein, die gleiche Signalbandbreite des Radarsignals zu verarbeiten. Ferner wird jeder Sensor durch die Position seiner Antenne beschrieben und kann entweder aktiv (Sende- und Empfangsmodus) oder passiv betrieben werden (nur Empfang, d.h. bistatisch, wie es beispielsweise im Fall einer Konstellation eng fliegender Satelliten möglich ist.)

Die durch die vorliegende Erfindung vorgeschlagene Methode ist gleichermaßen sowohl für flugzeug- als auch für weltraumgestützte Radarsensoren geeignet. Letztere können die Erde, den Mond oder auch andere Planeten, z.B. den Mars, und/oder deren Monde umkreisen, z.B. den Jupitermond Europa.

Das Verfahren gemäß der hiermit vorgeschlagenen Erfindung besteht insbesondere in der geeignet gewichteten, kohärenten Kombination von nadirgerichteten Radardaten, die auf wiederholten, räumlich getrennten Überflügen des gleichen Eisgebietes oder trockenen Gebiets aufgezeichnet wurden. Für ein flugzeuggestütztes Radarsystem erfolgt die Implementierung vorteilhaft mittels paralleler Überflüge mit kurzen räumlichen Basislinien. Bei einer weltraumgestützten Implementierung werden in zweckmäßiger Weise dagegen die auf wiederholten Orbits des gleichen Radarsensors oder ähnlicher, kompatibler Radarsensoren aufgezeichneten Radardaten ausgewertet.

Auf diese Art wird beim Verfahren nach der vorliegenden Erfindung im Grunde eine große, aber spärlich besetzte Antennenanordnung erzeugt. Sie wird durch viele und hohe Nebenzipfel (Grating Lobes) charakterisiert. Dennoch ist es, wie im Folgenden gezeigt wird, durch geeignete Kontrolle der einzelnen Antennengewichte möglich, die Antennenanordnung für Echolot in Eis oder in trockenen Gebieten zu nutzen.

Aus der Geometrie der Datenaufzeichnung werden zur Erzielung einer erhöhten Genauigkeit unter Berücksichtigung eines digitalen Geländemodells die Orte der mehrdeutigen Oberflächenreflexionen errechnet. Durch Inversion eines linearen Gleichungssystems werden in einem weiteren Schritt die Gewichte für die einzelnen Antennen/Datenaufzeichnungen bestimmt. Diese Berechnung erfolgt individuell für jede Eistiefe bzw. jede Tiefe des trockenen Gebiets, wobei Nullstellen des synthetisierten Antennendiagramms in Richtung der mehrdeutigen Oberflächenreflexionen gesetzt werden (Zero Steering, Antenna Pattern Nulling). Schließlich wird durch kohärente gewichtete Summierung der einzelnen Datenaufzeichnungen ein Radargramm erzeugt, dessen Mehrdeutigkeiten erheblich, d.h. um mindestens eine Größenordnung, unterdrückt sind.

Das Verfahren zum Untersuchen eines Eisgebiets oder eines trockenen Gebiets mittels Radar-Echolot-Sondierung nach der vorliegenden Erfindung bietet eine Reihe von Vorteilen.

Es wird eine Unterdrückung von "Quer-Mehrdeutigkeiten" in einem erheblich größeren Maß als bei Verwendung von Antennensystemen mit Mehrfachapertur erreicht.

Es bestehen keine strengen Anforderungen an eine Kenntnis des Antennendiagramms bzw. der Planarität des Bodens.

Das Verfahren nach der Erfindung sorgt für ein einwandfreies, genaues Echolot in Nadirrichtung und damit für eine erhöhte Empfindlichkeit bezüglich der Detektion interner Eisschichten oder Trockenschichten sowie der Reflexion vom Felsuntergrund.

Die Leistungsfähigkeit der Mehrdeutigkeitsunterdrückung ist in Abhängigkeit von der Anzahl verfügbarer Aufzeichnungen/Überflügen skalierbar. Eine erste Mehrdeutigkeitsunterdrückung ergibt sich bereits mit drei Überflügen. Für weltraumgestützte Systeme lässt sich eine verbesserte Mehrdeutigkeitsunterdrückung einschließlich einer Unterdrückung der durch die Pulswiederholfrequenz (PRF) hervorgerufen Entfernungsmehrdeutigkeit ("PRF Range Ambiguity") erreichen.

Es ist keine Symmetrieannahme für die Antenne bzw. die Anordnung der Überflüge erforderlich.

Es werden verbesserte Echoloteigenschaften erreicht, speziell auch für geringe Eistiefen.

Das Signal-Rausch-Verhältnisses wird bis zu einem Faktor entsprechend der Anzahl der Antennen/Überflüge verbessert.

Neben der Anwendung bei Radarsystemen für Echolot in Eis eignet sich das erfindungsgemäß arbeitende Verfahren auch für Echolot in trockenen Gebieten der Erde oder anderer Planeten und außerirdischer Objekte, wo wesentliche Eindringtiefen gewünscht werden. Auf der Erde kann das z.B. die Entdeckung sandbedeckter antiker Siedlungen oder alter Flussläufe in Wüstengebieten ermöglichen. Im Falle des Einsatzes des Verfahrens nach der vorliegenden Erfindung bei Planeten begünstigt dieses Verfahren die Detektion von sand- und sedimentbedeckten Kratern oder Eisschichten sowie weiterer morphologischer Erscheinungen.

Vorteilhafte Weiterbildungen und Ausgestaltungen der Erfindung sind in den auf Patentanspruch 1 unmittelbar oder mittelbar rückbezogenen Ansprüchen angegeben.

Beschreibung der Zeichnungen

Es zeigen:

Fig.1    in einer schematischen Prinzipansicht die bereits vorher erläuterte Geometrie quer zur Flugrichtung ei- nes nadirgerichteten Radarsensors für Echolot in Eis, wobei mehrdeutige Radarsignale von links und rechts der Bodenspur und das Nutzsignal aus der Nadirrich- tung mit der gleichen Laufzeit empfangen werden,

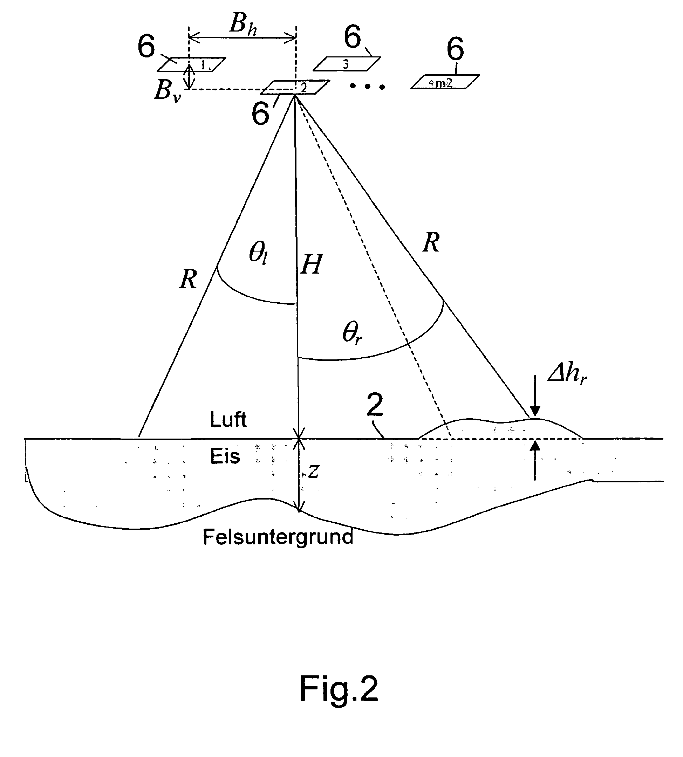

Fig.2    ebenfalls in einer schematischen Ansicht eine Geomet- rie quer zur Flugrichtung eines nadirgerichteten Ra- darsensors für Echolot in Eis, wobei gemäß dem Ver- fahren nach der vorliegenden Erfindung mehrfach ab- laufende, räumlich zueinander versetzte Datenauf- zeichnungen mittels des Radarsensors vorgenommen wer- den,

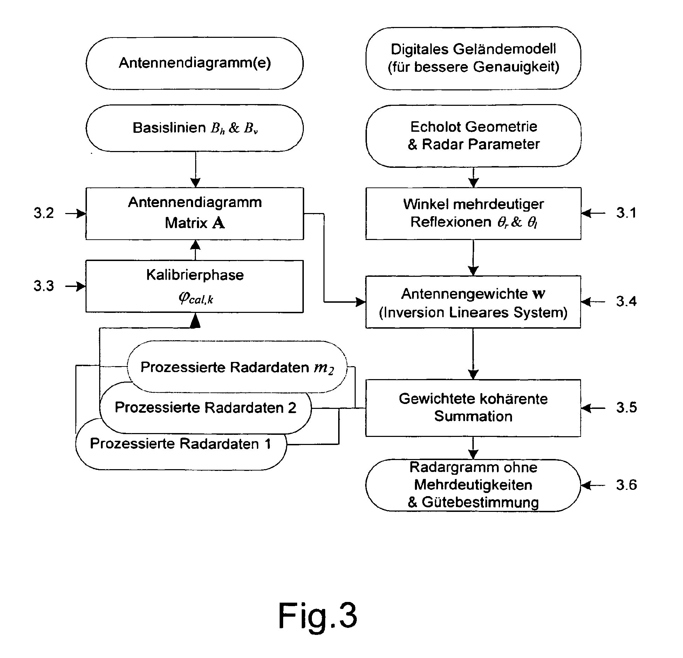

Fig.3    in einer Blockschaltbilddarstellung den schematischen Ablauf des erfindungsgemäß arbeitenden Verfahrens zum Untersuchen eines Eis- oder Trockengebiets,

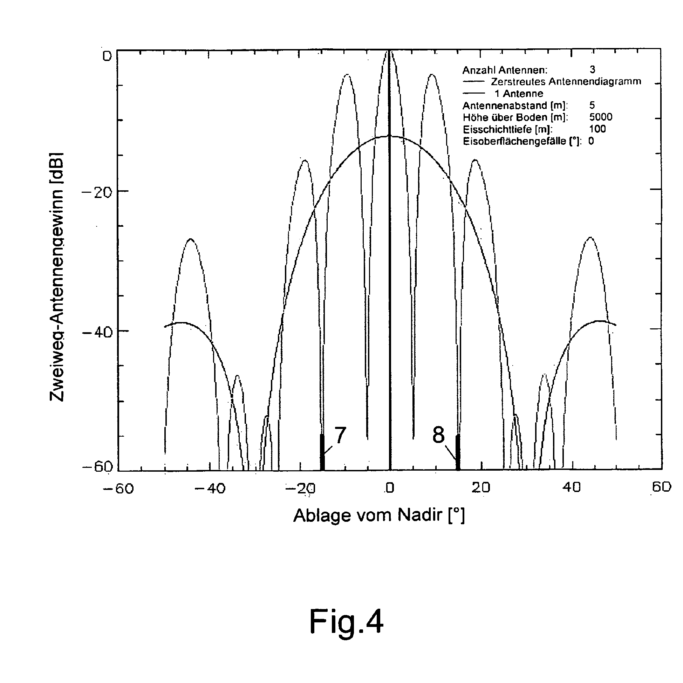

Fig.4    als Beispiel ein synthetisches Diagramm (grauer Dia- grammlinienverlauf) einer dünn besetzten Antennenan- ordnung aus drei Antennen/Überflügen in 5000 m Höhe mit einer adaptiven Gewichtung für Eistiefen von 100 m im Vergleich zum Diagramm (schwarzer Diagramm- linienverlauf) einer einzelnen Antenne, wobei die ho- rizontale Basislinienlänge für diese drei Überflüge 5 m beträgt,

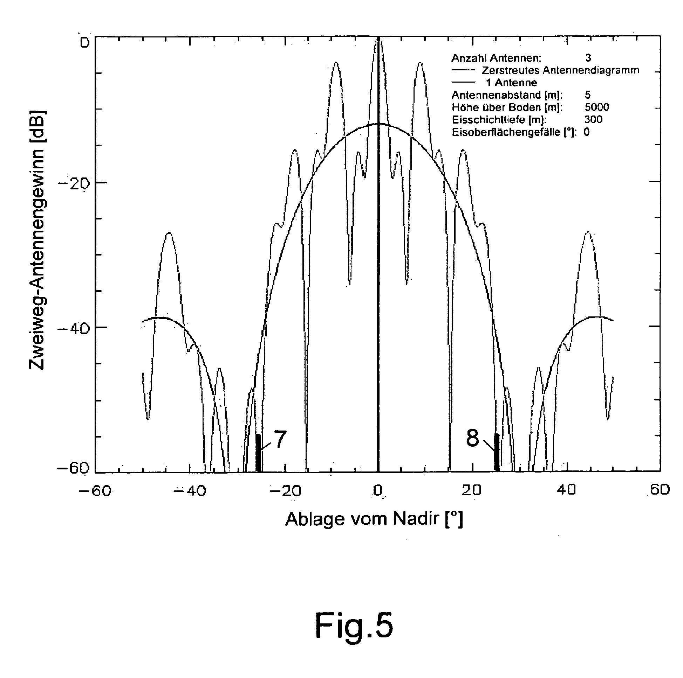

Fig.5    als weiteres Beispiel ein synthetisches Diagramm (grauer Diagrammlinienverlauf) einer dünn besetzten Antennenanordnung aus drei Antennen/Überflügen in 5000 m Höhe mit einer adaptiven Gewichtung für Eis- tiefen von 300 m im Vergleich zum Diagramm (schwarzer Diagrammlinienverlauf) einer einzelnen Antenne, wobei die horizontale Basislinienlänge für diese drei Über- flüge 5 m beträgt,

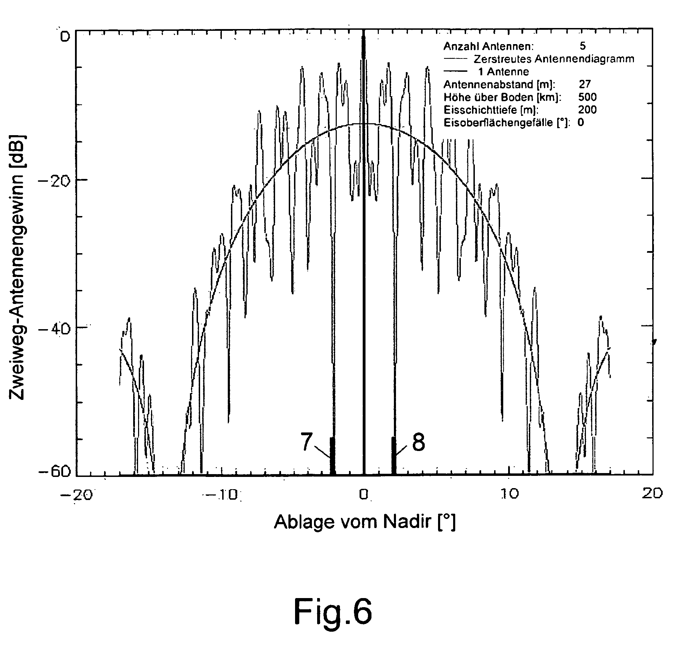

Fig.6    als drittes Beispiel ein synthetisches Diagramm (grauer Diagrammlinienverlauf) einer dünn besetzten Antennenanordnung aus fünf Antennen/Überflügen in 500 km Höhe mit einer adaptiven Gewichtung für Eis- tiefen von 100 m im Vergleich zum Diagramm (schwarzer Diagrammlinienverlauf) einer einzelnen Antenne, wobei die horizontale Basislinienlänge für diese fünf Über- flüge ungefähr 27 m beträgt, und

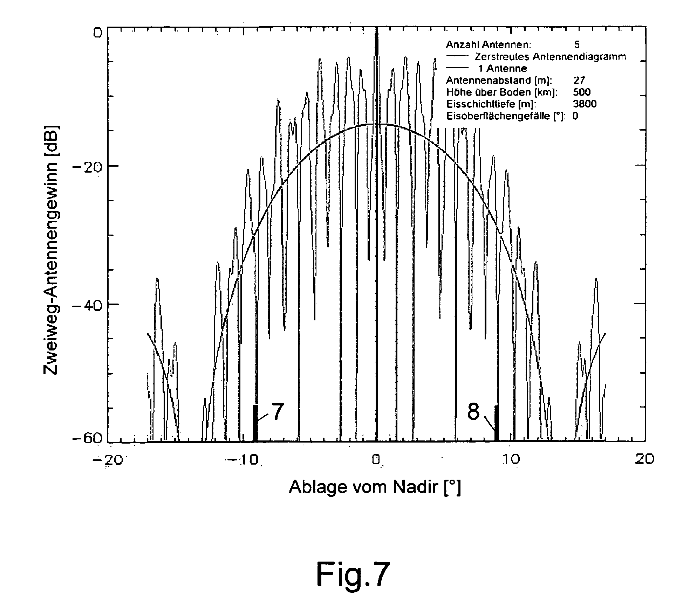

Fig.7    als letztes Beispiel ein synthetisches Diagramm (grauer Diagrammlinienverlauf) einer dünn besetzten Antennenanordnung aus fünf Antennen/Überflügen in 500 km Höhe mit einer adaptiven Gewichtung für Eis- tiefen von 3800 m im Vergleich zum Diagramm (schwar- zer Diagrammlinienverlauf)einer einzelnen Antenne, wobei die horizontale Basislinienlänge für diese fünf Überflüge ungefähr 27m beträgt.

Beschreibung der Erfindung

Fig.2 zeigt schematisch die Strahlungsgeometrie eines nadirgerichteten Radarsensors 6 für Echolot in Eis. Die Flugrichtung des flugzeug- oder weltraumgestützten Radarsensors 6 zeigt senkrecht in die Abbildungsebene. Mehrdeutigkeiten quer zur Flugrichtung überlagern das interessierende Echosignal, das aus der Nadirrichtung kommt. Wegen der Topographie des abzubildenden Gebietes ist die Geometrie im Allgemeinen nicht symmetrisch.
Aufgrund physikalischer und technischer Grenzen kann die Antennenapertur nicht groß und damit bündelnd genug sein, um lediglich die Nadirregion zu beleuchten. Infolgedessen werden Signale auch von rechts und links der Bodenspur von der Hauptkeule der Antenne erfasst. Dieser Sachverhalt wurde bereits in Verbindung mit der Beschreibung von Fig.1 erläutert, für welche die gleichen geometrischen Bezugszeichen verwendet wurden wie nun für Fig.2.
Die mehrfache Darstellung des Radarsensors 6 soll symbolisieren, dass mehrfache, räumlich zueinander versetzte Überflüge des Radarsensors 6 stattfinden und daher über mehrfache Radardatenaufzeichnungen (1, 2, 3, ..., $m2$) des Eisgebiets verfügt werden kann. Dabei ist die horizontale Basislinienlänge der Überflüge mit $B_h$ und die vertikale Basislinienlänge mit $B_v$ bezeichnet.
In dem in Fig.2 dargestellten Beispiel ist die die Signallaufzeit beeinflussende Höhe der rechten Mehrdeutigkeit über dem Referenzniveau 2 mit $\Delta h_r$ bezeichnet. Eine linke Mehrdeutigkeit mit einer Höhe $\Delta h_1$ über dem Referenzniveau 2 ist in Fig.2 nicht dargestellt, kann grundsätzlich aber ebenfalls vorliegen.
Ein Blockschaltbild zur Erklärung des Ablaufs des durch die vorliegende Erfindung vorgeschlagenen Mehrdeutigkeitsunterdrückungsverfahrens ist in Fig.3 gezeigt. Dieses Verfahren wird anhand der in Fig.2 dargestellten Geometrie im Folgenden zusammen mit dem Ablaufplan von Fig.3 erläutert.
Aus der Geometrie der Abbildung werden die Richtungen der O-berflächenmehrdeutigkeiten als Funktion der Eistiefe bestimmt (Einheit 3.1 in Fig.3):

$$\theta_{l,r} = \arccos \frac{H - dh_{l,r}}{H + n \cdot z} = \arccos \frac{H - dh_{l,r}}{R} \; . \tag{1}$$

Dabei bezeichnet $H$ die Höhe der Referenzantenne des Radarsensors 6 über der Referenzebene 2, $dh_1$ and $dh_r$ sind die Höhen der linken und rechten Mehrdeutigkeiten über dem Referenzniveau 2, $n$ ist der Refraktionsindex in Eis und $z$ die Eistiefe, aus der Information gewünscht wird. Die Laufzeit des Radarsignals ist die gleiche für das Nadirsignal und die Mehrdeutigkeiten und somit $H + n \cdot z = R$.

Im Falle ebener Gebiete ist die genaue Kenntnis der Eisoberfläche nicht erforderlich, da die Höhe $H$ aus der Laufzeit der ersten starken Reflexion des Echolots bestimmt und des weiteren $\theta_l = \theta_r$ angenommen werden kann.

In einem nächsten Schritt werden die Antennendiagramm-Matrix **A** berechnet (Einheit 3.2 in Fig.3) und ein lineares Gleichungssystem aufgestellt:

$$[\mathbf{A}]_{m1 \; x \; m2} \cdot [\mathbf{w}]_{m2 \; x \; 1} = [\mathbf{r}]_{m1 \; x \; 1} \; . \tag{2}$$

**A** hat die Dimensionen $m1 \times m2$. $m1$ bezeichnet die Anzahl der relevanten Blickwinkel (z.B. 3, entsprechend der Nadirrichtung und der linken bzw. rechten Mehrdeutigkeit) und $m2$ die Anzahl der verfügbaren Antennen/Überflüge. **A** beinhaltet die komplexwertigen Elemente der Antennendiagramme für die $m1$ relevanten Blickrichtungen (z.B. für $\theta=0$, $\theta=\theta_r$, und $\theta=\theta_1$).

Für den Fall, dass eine einzige Antenne für alle Überflüge genutzt wurde, sind die Spalten von **A** identisch bis auf einen zusätzlichen Faktor, der von dem räumlichen relativen Abstand zwischen den Antennen/Überflügen (horizontale und vertikale Basislinien $B_h$ und $B_v$) und einer Kalibrierphase bestimmt ist. Die Elemente der Matrix **A** werden wie folgt berechnet (Einheit 3.2 in Fig.3):

$$a_{k,i}(\theta_i) = G_k(\theta_i) \cdot \exp\left[ \frac{4\pi}{\lambda} \cdot \left( B_{h,k} \sin(\theta_i) + B_{v,k} \cos(\theta_i) \right) - \varphi_{cal,k} \right], \tag{3}$$

wobei $G_k$ der komplexwertige Gewinn der Antenne $k$ in Richtung des Winkels $\theta_i$ ist.

Mittels einer Kalibrierphase $\varphi_{cal,k}$ können verschiedene Ausbreitungseffekte berücksichtigt werden, z.B. auf Grund unterschiedlicher atmosphärischer Bedingungen oder ionosphärischer Effekte. Sie kann unabhängig für jede Datenaufzeichnung k aus der Phase der ersten starken Eisoberflächenreflexion bestimmt werden (Einheit 3.3 in Fig.3).

Der Spaltenvektor $r$ in Gleichung (2) beinhaltet die Information über den gewünschten Gewinn der Antennenanordnung. Zum Beispiel:

$$\mathbf{r} = \begin{bmatrix} c \\ 0 \\ 0 \end{bmatrix}, \qquad c \neq 0 \; ,$$

für die drei Winkel $\theta=0$, $\theta=\theta_r$, und $\theta=\theta_1$. Dies erlaubt eine Signalunterdrückung in Richtung der Mehrdeutigkeiten $\theta_r$ und $\theta_1$ sowie keine Unterdrückung in Nadirrichtung.

Das lineare Gleichungssystem in Gleichung (2) kann gelöst werden, sofern eine rechte Inverse Matrix zu **A** existiert, siehe Gilbert Strang: "Linear Algebra and its Applications", ISBN: 0155510053, 1988. Für die vorgeschlagene Anwendung ist dies normalerweise der Fall, sobald die Anzahl der Aufzeichnungen m2 größer oder gleich der Anzahl der relevanten Winkel m1 ist ($m2 \geq m1$). Die komplexwertigen Gewichte **w** für die verschiedenen Datenaufzeichnungen werden folgendermaßen errechnet (Einheit 3.4 in Fig.3):

$$[\mathbf{w}]_{m2 \times 1} = [\mathbf{A}]^T_{m2 \times m1} \cdot [\mathbf{A} \star \mathbf{A}^T]^{-1}_{m1 \times m1} \cdot [\mathbf{r}]_{m1 \times 1} . \qquad (4)$$

Der letzte Schritt ist die gewichtete Addition der individuellen Aufzeichnungen, um ein Radargramm zu erzeugen, das sich durch bestmögliche Mehrdeutigkeitsunterdrückung auszeichnet (Einheit 3.5 in Fig.3). Die unverfälschte Radarreflektivität des Nadirsignals berechnet sich somit als (Einheit 3.6 in Fig.3):

$$\sigma(z) = \frac{S_{sum}(z)}{\displaystyle\sum_{k=1}^{m2} w_k(z) G_k(0)} \cdot L(z) , \qquad (5)$$

wobei $S_{sum}$ die gewichtete Summe aller Datenaufzeichnungen und $L$ den Verlust aufgrund der Ausbreitung im Eismedium darstellt, der wiederum von den Eiseigenschaften und der Temperatur abhängt.

Die Güte der Rekonstruktion des Nadirsignals wird durch das Verhältnis der integrierten Leistungen des synthetisierten Antennendiagramms in dem Winkelbereich entsprechend der Nadirrichtung und Mehrdeutigkeitsrichtungen bestimmt (Integrated Signal to Clutter Ratio, ISCR):

$$ISCR = \frac{\displaystyle\int_{-\Delta\theta}^{\Delta\theta} G_{sum}(\theta) d\theta}{\displaystyle\int_{\theta_l-\Delta\theta}^{\theta_l+\Delta\theta} G_{sum}(\theta) d\theta + \int_{\theta_r-\Delta\theta}^{\theta_r+\Delta\theta} G_{sum}(\theta) d\theta} , \qquad (6)$$

wobei der Winkelbereich $\Delta\theta$ geeignet gewählt werden kann, um unterschiedliche Fehlerquellen zu berücksichtigen (z.B. ungenaue Kenntnis der Abbildungsgeometrie).

Das erfindungsgemäße Verfahren wird nachfolgend an zwei unterschiedlichen Beispielen veranschaulicht, nämlich zum einen für den flugzeuggestützten Fall (Fig.4 und Fig.5) und zum anderen für den Einsatz im Weltraum (Fig. 6 und Fig.7).

Fig.4 und Fig.5 zeigen jeweils in einem Diagramm den Gewinn [dB] einer Einzelantenne (schwarzer Diagrammlinienverlauf) sowie einer drei zueinander versetzte Überflüge eines Radarsensors nachbildenden, dünn besetzten Antennenanordnung (grauer Diagrammlinienverlauf) in Abhängigkeit vom Nadir-Ablagewinkel [°] im flugzeuggestützten Fall. Hier wurden bei einer Wellenlänge von 70 cm also lediglich drei Radardatensignalaufzeichnungen mit unregelmäßigem horizontalem Basislängenabstand von etwa 5m genutzt, die dann adaptiv gewichtet kombiniert werden. Die Überflughöhe des Radarsensors über dem Eisgebiet beträgt im Beispiel etwa 5000 m.

Es sind die Ergebnisse für zwei unterschiedliche Eistiefen, nämlich für 100 m in Fig.4 und für 300 m in Fig.5, gezeigt. Die Orte der linken und rechten Mehrdeutigkeit, mit den Bezugszeichen 7 bzw. 8 markiert, werden adaptiv zu Null gesetzt, wobei gleichzeitig ein erhöhter Gewinn in Nadirrichtung gewährleistet wird. Mit der adaptiven Steuerung der Datenaufzeichnungen gemäß der Erfindung ergibt sich somit ein in Form von Grating Lobes zerstreutes Diagramm mit einem im Vergleich zur Einzelantenne erhöhten Gewinn in der interessierenden Nadirrichtung und Nullstellen an den beiden Mehrdeutigkeitsorten 7 und 8.

Fig.6 und Fig.7 zeigen ähnliche Diagramme für eine in einer Höhe von 500 m weltraumgestützte, fünf zueinander versetzte Überflüge eines Radarsensors nachbildenden Antennenanordnung (grauer Diagrammlinienverlauf), ebenfalls jeweils im Vergleich zum Diagramm für eine Einzelantenne (schwarzer Diagrammlinienverlauf). Hier wird das synthetische Diagramm also aus fünf unregelmäßig abgetasteten Radardatensignalaufzeichnungen errechnet, wobei die mittlere horizontale Basislinienlänge etwa 27 m beträgt.

Die dargestellten Ergebnisse beziehen sich hier auf Eistiefen von 200 m in Fig.6 und 3800 m in Fig.7. Auch hier werden die Orte der linken und rechten Mehrdeutigkeit, ebenfalls mit den Bezugszeichen 7 bzw. 8 markiert, adaptiv zu Null gesetzt, wobei gleichzeitig ein erhöhter Gewinn in Nadirrichtung sichergestellt wird. Mit der adaptiven Gewichtssteuerung der Datenaufzeichnungen gemäß der Erfindung ergibt sich somit auch hier ein in Form von Grating Lobes zerstreutes Diagramm mit einem im Vergleich zur Einzelantenne erhöhten Gewinn in der interessierenden Nadirrichtung und Nullstellen an den beiden Mehrdeutigkeitsorten 7 und 8.

Bezugszeichenliste

| 1 | Antenne |
| 2 | Referenzebene, Referenzniveau |
| 3, 4 | Oberflächenechosignale |
| 5 | Nutzsignal aus Nadirrichtung |
| 6 | Radarsensor |
| 7 | Ort der linken Mehrdeutigkeit |
| 8 | Ort der rechten Mehrdeutigkeit |
| $B_h$ | Horizontale Basislinienlänge |
| $B_v$ | Vertikale Basislinienlänge |
| H | Senkrechte Höhe |
| m2 | Anzahl der verfügbaren Überflüge |
| R | Radius |
| z | Maximale Eistiefe |
| $\Delta h_1$ | Höhe der linken Mehrdeutigkeit über Referenzniveau |
| $\Delta h_r$ | Höhe der rechten Mehrdeutigkeit über Referenzniveau |
| $\Theta_1, \Theta_r$ | Ablagewinkel zur Nadirrichtung |

**Patentansprüche**

1. Verfahren zum Untersuchen eines Eisgebiets oder trockenen Gebiets mittels Radar-Echolot-Sondierung, bei dem

- von einem das zu untersuchende Gebiet überfliegenden Radarsensor (6) die Oberfläche und das Volumeninnere des Gebiets beleuchtende Radarsendeimpulse in Nadirrichtung ausgesendet werden, die im Radarsensor empfangenen reflektierten Radarimpulssignale prozessiert und zu einem Radargramm ausgewertet werden, und
- Maßnahmen zur Unterdrückung von Mehrdeutigkeiten
vorgesehen sind,
**dadurch gekennzeichnet,**
- **dass** das zu untersuchende Gebiet vom Radarsensor (6) oder von mehreren kompatiblen Radarsensoren gleicher Betriebswellenlänge in mehreren räumlich getrennten, benachbarten bzw. parallelen Bahnen überflogen wird und die in jeder Bahn empfangenen Radarsignaldaten aufgezeichnet werden,
- **dass** die für jede der verschiedenen Bahnen aufgezeichneten Radarsignaldaten kohärent und unter Gewichtung zum Radargramm summiert werden, wobei eine adaptive komplexwertige Gewichtung der Radarsignaldaten für jede der einzelnen Bahnen unter Zuhilfenahme eines geometrischen Modells vorgenommen wird, welches die Topographie der Umgebung des zu untersuchenden Gebiets berücksichtigt,
- **dass** die komplexwertige Gewichtung für jede Tiefe des untersuchten Gebiets durch die Lösung eines linearen Gleichungssystems ermittelt wird, wonach ein synthetisches Antennendiagramm berechnet wird, welches Nullstellen in Richtung der Mehrdeutigkeiten aufweist,
- **dass** aus dem geometrischen Modell der Umgebung die Richtungen ($\theta_1, \theta_r$) der Mehrdeutigkeiten bestimmt werden,
- **dass** eine Information über den gewünschten Gewinn der Sensor-Antennenanordnung, der eine Signalunterdrückung in den Richtungen ($\theta_1, \theta_r$) der Mehrdeutigkeiten sowie keine Unterdrückung in Nadirrichtung erlaubt, bestimmt wird und
- **dass** diese Information über den gewünschten Gewinn in dem linearen Gleichungssystem verwendet wird.

2. Verfahren nach Anspruch 1, **gekennzeichnet durch** eine kohärente Doppler-Verarbeitung in Form einer Filterung oder eines sogenannten "Doppler Beam Sharpening", um das Antennendiagramm in Flugrichtung künstlich zu verkleinern, so dass Mehrdeutigkeitsechosignale, die von Reflexionen vor und hinter dem Radarsensor (6) stammen, herausgefiltert bzw. gedämpft werden und das Signal-Rausch-Verhältnis wegen der kohärenten Addition der interessierenden Signalanteile verbessert wird.

**3.** Verfahren nach Anspruch 1 oder 2, **dadurch gekennzeichnet, dass** bei Verwendung flugzeuggestützter Radarsensoren die Implementierung mittels paralleler Überflüge mit kurzen räumlichen Basislinien dazwischen vorgenommen wird.

**4.** Verfahren nach Anspruch 1 oder 2, **dadurch gekennzeichnet, dass** bei einer weltraumgestützten Implementierung die auf wiederholten Orbits des gleichen Radarsensors oder ähnlicher, kompatibler Radarsensoren aufgezeichneten Radardaten ausgewertet werden.

**5.** Verfahren nach einem der vorhergehenden Ansprüche, **gekennzeichnet durch** eine Skalierbarkeit der Leistungsfähigkeit der Mehrdeutigkeitsunterdrückung in Abhängigkeit von der Anzahl verfügbarer Aufzeichnungen/Überflüge.

**6.** Verfahren nach einem der vorhergehenden Ansprüche, **dadurch gekennzeichnet, dass** mittels einer Kalibrierphase verschiedene Ausbreitungseffekte berücksichtigt werden, die vor allem auf Grund unterschiedlicher atmosphärischer Bedingungen oder ionosphärischer Effekte bestehen.

**7.** Verfahren nach Anspruch 6, **dadurch gekennzeichnet, dass** die Kalibrierphase unabhängig für jede Datenaufzeichnung aus der Phase der ersten starken Eisoberflächenreflexion an der Eisoberfläche oder an der Oberfläche des zu untersuchenden Trockengebiets bestimmt wird.

**Claims**

**1.** A method for examining an ice region or dry region using radar echo sounding, wherein

- a radar sensor (6) flying over the region to be examined emits radar transmission pulses in the direction of the nadir, illuminating the surface and the inner volume of the region, wherein the reflected radar pulse signals received in the radar sensor are processed and evaluated to obtain a radargram, and
- wherein measures are provided to suppress ambiguities, **characterized in that**
- the region to be examined is overflown by the radar sensor (6) or by multiple compatible radar sensors of the same operating wavelength on multiple spatially separated adjacent or parallel paths and the radar signal data received on each path are recorded,
- the radar signal data recorded for each of the different paths are summed coherently and using a weighting to form a radargram, wherein an adaptive complex-valued weighting for each of the individual paths is performed using a geometrical model which takes into account the topography of the environment of the region to be examined, and
- the complex-valued weighting for every depth of the examined region is determined by solving a system of linear equations from which is calculated a synthetic antenna pattern which has zero points in the direction of the ambiguities,
- the directions $(\theta_1, \theta_r)$ of the ambiguities are determined from the geometrical model of the environment,
- an information is determined about the desired gain of the sensor antenna array that allows for a signal suppression in the directions $(\theta_1, \theta_r)$ of the ambiguities, as well as no suppression in the direction of the nadir, and
- said information about the desired gain is used in the linear equation system.

**2.** The method of claim 1, **characterized by** a coherent Doppler processing in the form of a filtering or a so-called "Doppler Beam Sharpening" so as to artificially reduce the antenna pattern in the direction of flight, so that ambiguity echo signals coming from reflections in front of and behind the radar sensor (6) are filtered out or attenuated and the signal-to-noise ratio is improved due to the coherent summation of the interesting signal portions.

**3.** The method of claim 1 or 2, **characterized in that**, when airplane-borne radar sensors are used, the implementation is performed with parallel overpasses having short spatial base lines therebetween.

**4.** The method of claim 1 or 2, **characterized in that**, with a space-borne implementation, the radar data recorded on repeated orbits of the same radar sensor or similar compatible radar sensors are evaluated.

**5.** The method of one of the preceding claims, **characterized by** the scalability of the performance of e ambiguity suppression as a function of the number of available recordings/overpasses.

**6.** The method of one of the preceding claims, **characterized in that** a calibration phase is used to take into account different propagation effects that exist primarily due to different atmospheric conditions or ionospheric effects.

**7.** The method of claim 6, **characterized in that** the calibration phase is determined independently for each data recording from the phase of the first strong ice surface reflection at the ice surface or at the surface of the dry region to be examined.

**Revendications**

**1.** Procédé d'exploration d'une zone glaciaire ou d'une zone sèche par échosondage par radar, dans lequel

- un capteur radar (6) survolant la zone à explorer émet dans la di- rection du nadir des impulsions radar d'émission illuminant la sur- face et l'intérieur du volume de la zone, les signaux des impulsions radar reflétés reçus dans le capteur radar sont traités et évalués pour former un radargramme, et
- des mesures sont prévues pour supprimer des ambigüités,

**caractérisé en ce que**

- le capteur radar (6) ou plusieurs capteurs radar compatibles à lon- gueur d'onde de service identique survolent la zone à explorer sur plusieurs trajets écartés avoisinants ou parallèles, et les données des signaux radar reçues sur chaque trajet sont enregistrées,
- les données des signaux radar enregistrées pour chaque trajet diffé- rent sont additionnées de manière cohérente et sous pondération pour former un radargramme, une pondération adaptative à valeurs complexes est faite sur les données des signaux radar pour chaque trajet individuel en utilisant un modèle géométrique tenant compte de la topographie de l'environnement de la zone à explorer,
- la pondération à valeurs complexes est déterminée pour chaque profondeur de la zone explorée par la résolution d'un système d'équation linéaire duquel on calcule un diagramme d'antenne syn- thétique qui comprend des points zéro dans la direction des am- bigüités,
- les directions ($\theta_1$, $\theta_r$) des ambigüités sont déterminées à partir du modèle géométrique de l'environnement,
- l'on détermine une information sur le gain désiré de l'ensemble des antennes du capteur, lequel gain permet la suppression de signaux dans les directions ($\theta_1$, $\theta_r$) des ambigüités et ne permet pas une suppression dans la direction du nadir, et
- cette information sur le gain désiré est utilisée dans ledit système d'équation linéaire.

**2.** Procédé selon la revendication 1, **caractérisé par** un traitement Doppler cohérent en forme de filtrage ou d'un traitement appelé "Doppler Beam Sharpening" afin de réduire artificiellement ledit diagramme d'antenne dans la direction de vol de sorte que des signaux écho d'ambigüité, causés par des réflexions avant et derrière ledit capteur radar (6), sont filtrés ou atténués et le rapport signal-bruit est amélioré à cause de l'addition cohérente des portions de signal intéressantes.

**3.** Procédé selon les revendications 1 ou 2, **caractérisé en ce que** lors de l'utilisation de capteurs radar embarqués, l'implémentation se fait par des survols parallèles avec des courtes lignes de base spatiales entre ceux-ci.

**4.** Procédé selon les revendications 1 ou 2, **caractérisé en ce que** lors d'une implémentation spatiale, les données radar sont évaluées, qui sont enregistrées sur des orbites répétées d'un même capteur radar ou de capteurs radar similaires compatibles.

**5.** Procédé selon l'une quelconque des revendications précédentes, **caractérisé par** une scalabilité de la capacité de la suppression d'ambigüités en fonction du nombre d'enregistrements/survols.

**6.** Procédé selon l'une quelconque des revendications précédentes, **caractérisé en ce que** différents effets de propagation sont pris en considération moyennant une phase de calibration, les effets existant surtout à cause de différentes conditions atmosphériques ou effets ionosphériques.

**7.** Procédé selon la revendication 6, **caractérisé en ce que** la phase de calibration est déterminée indépendemment pour chaque enregistrement de données à partir de la phase de la première forte réflexion de la surface glaciaire à la surface glaciaire ou à la surface d'une zone sèche explorée.

Fig.1

EP 2 130 062 B1

Fig.2

12

Antennendiagramm(e)

Digitales Geländemodell
(für bessere Genauigkeit)

Basislinien $B_h$ & $B_v$

Echolot Geometrie
& Radar Parameter

3.2 → Antennendiagramm
Matrix **A**

Winkel mehrdeutiger
Reflexionen $\theta_r$ & $\theta_l$ ← 3.1

3.3 → Kalibrierphase
$\varphi_{cal,k}$

Antennengewichte **w**
(Inversion Lineares System) ← 3.4

Prozessierte Radardaten $m_2$

Prozessierte Radardaten 2

Prozessierte Radardaten 1

Gewichtete kohärente
Summation ← 3.5

Radargramm ohne
Mehrdeutigkeiten
& Gütebestimmung ← 3.6

# Fig.3

**Fig.4**

Fig.5

Fig.6

Fig.7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6188348 B1

**In der Beschreibung aufgeführte Nicht-Patentliteratur**

- **Picardi, G. et al.** Radar Soundings of the Subsurface of Mars. *Science,* 23. Dezember 2005, vol. 310, 1925-1928
- **D. R. Wehner.** High Resolution Radar. *Artech House,* 1995
- **G. Picardi ; S. Sorge ; R. Seu ; G. Fedele ; R. L. Jordan.** Coherent Cancellation of Surface Clutter for Radar Sounding. *IGARSS Proceedings, IEEE Geoscience and Remote Sensing Symposium,* 28. Juni 1999
- **E. Rodriguez ; A. Freeman ; K. Jezek ; X. Wu.** A New Technique for Interferometric Sounding of Ice Sheets. *Proc. EUSAR, VDE,* 16. Mai 2006, ISBN 978-3-8007-2960-9
- **D. Braaten ; S. Gogineni.** Radar Measurements of Ice Sheet Thickness of Outlet Glaciers in Greenland. *IGARSS 2002, IEEE 2002 International Geoscience and Remote Sensing Symposium,* 24. Juni 2002, vol. 4, ISBN 978-0-7803-7536-9, 2188-2189
- **Gilbert Strang.** *Linear Algebra and its Applications,* 1988, ISBN 0155510053, 1988